# EUROPÄISCHE PATENTSCHRIFT

(11) **EP 2 883 672 B1**
(45) Veröffentlichungstag und Bekanntmachung des Hinweises auf die Patenterteilung: **06.11.2019**
(21) Anmeldenummer: 14004142.7
(22) Anmeldetag: 09.12.2014
(51) Int. Cl.: B29B 9/16, B29B 13/06, F26B 3/00, F26B 23/00, F02G 5/04

(54) **Anlage und Verfahren zur Kunststoffbe- und/oder -verarbeitung**
Plant and method for the treatment and/or processing of polymeric materials
Installation et procédé pour le traitement et/ou la transformation de matières plastiques

(30) Priorität: 13.12.2013 DE 102013021125
(43) Veröffentlichungstag der Anmeldung: 17.06.2015
(73) Patentinhaber: Motan Holding GmbH, 78467 Konstanz (DE)
(72) Erfinder: Breuer, Peter, 78250 Tengen (DE); Karl, Wolfgang, 88299 Leutkirch (DE)
(74) Vertreter: Kohl, Karl-Heinz

(56) Entgegenhaltungen:
- EP-A1- 2 570 247
- DE-A1- 10 039 495
- DE-A1- 19 651 210
- DE-A1- 19 654 093
- DE-A1-102012 007 769
- DE-B3-102005 048 795
- DE-C- 527 363
- DE-U1-202009 014 971
- FR-A1- 2 663 259
- GB-A- 1 451 718
- US-A- 4 120 849

## Beschreibung

Die Erfindung betrifft eine Anlage mit wenigstens einer Vorrichtung zur Kunststoffbe- und/oder -verarbeitung nach dem Oberbegriff des Anspruches 1 sowie ein Verfahren zum Betreiben einer solchen Anlage nach dem Oberbegriff des Anspruches 6.

Bei der Kunststoffverarbeitung ist es bekannt, Kunststoffgranulate in wenigstens einem Trocknungsbehälter durch Hindurchleiten eines Trocknungsmediums, vorzugsweise von Luft, zu trocknen und auf diese Weise dem Kunststoffgranulat die für die spätere Verarbeitung schädliche Feuchtigkeit zu entziehen. Nach dem Durchströmen des Trocknungsbehälters wird das Trocknungsmedium entfeuchtet und vor dem erneuten Eintritt in den Trocknungsbehälter auf die Trocknungstemperatur erwärmt. Diese Materialkonditionierung wird unter Einsatz von teurem Strom durchgeführt, wodurch die Materialkonditionierung kostenaufwändig wird.

Darüber hinaus ist es bei der Niedertemperaturtrocknung von Feuchtgut bekannt (DE 196 54 093 A1), Klärschlamm mit Trocknungsluft in einer Trocknungsstufe zu trocknen. Als Trocknungsluft wird erwärmte Außenluft oder Umluft eingesetzt. Diese Trocknungsluft wird in einem Kreislauf geführt. Der Trocknungsvorrichtung ist ein Blockheizkraftwerk zugeordnet, dessen Abwärme und elektrische Energie für die Trocknungsvorrichtung bzw. den Trocknungsvorgang herangezogen werden.

Der Erfindung liegt die Aufgabe zugrunde, die gattungsgemäße Anlage und das gattungsgemäße Verfahren so auszubilden, dass die Kunststoffbe- und/oder -verarbeitung kostengünstig durchgeführt werden kann.

Diese Aufgabe wird bei der gattungsgemäßen Anlage erfindungsgemäß mit den kennzeichnenden Merkmalen des Anspruches 1 und einem gattungsgemäßen Verfahren erfindungsgemäß mit den kennzeichnenden Merkmalen des Anspruches 6 gelöst.

Bei der erfindungsgemäßen Anlage wird die Abwärme des Blockheizkraftwerkes und/oder der vom Blockheizkraftwerk erzeugte Strom dazu ausgenutzt, um die Vorrichtung für die Kunststoffbe- und/oder -verarbeitung kostengünstig betreiben zu können. Die Abwärme wird zur Materialkonditionierung genutzt, weil hier viel Energie erforderlich ist. Da mit einem Blockheizkraftwerk erzeugte Abwärme und elektrische Energie wesentlich kostengünstiger sind als der über das Stromnetz bezogene elektrische Strom, kann die Vorrichtung äußerst kostengünstig betrieben werden.

An das Blockheizkraftwerk ist die Vorrichtung zur Kunststoff- und/oder- verarbeitung angeschlossen. Außerdem ist an das Blockheizkraftwerk über eine Abwärmeleitung eine Heizeinheit angeschlossen, die über eine Leitung mit wenigstens einem Trocknungsbehälter für die Kunststoff-Ausgangsstoffe verbunden ist. Der Trocknungsbehälter liegt zusammen mit der Heizeinheit in einem Trocknungskreislauf. Der Trocknungsbehälter ist über eine Rückluftleitung zur Kühlung der Rückluft mit einem Kühler verbunden, der zum Entzug der Feuchtigkeit aus der Rückluft an die Trocknungs- und Regeneriereinheit angeschlossen ist. Sie weist Entfeuchtungseinheiten auf, in deren Zu- und Ableitungen Schaltventile sitzen. Die Trocknungs- und Regeneriereinheit ist über wenigstens eine Leitung mit der Heizeinheit verbunden. Der Trocknungsbehälter ist mit der Vorrichtung leitungsverbunden.

Vorteilhaft wird wenigstens ein Teil der Abwärme über wenigstens einen Wärmetauscher direkt oder indirekt auf ein Trocknungsmedium übertragen, das zur Materialkonditionierung des Kunststoff-Ausgangsproduktes eingesetzt wird. Das Trocknungsmedium ist vorzugsweise Luft, die zum Trocknen der Kunststoff-Ausgangsstoffe verwendet wird. Sie sind vorteilhaft Kunststoffgranulatschüttungen, die vom Trocknungsmedium durchströmt werden. Über den Wärmetauschprozess wird die Abwärme des Blockheizkraftwerkes dazu genutzt, das Trocknungsmedium vor dem Eintritt in den Trocknungsbehälter auf die notwendige Trocknungstemperatur zu erwärmen.

Als Abwärme des Blockheizkraftwerkes dienen vorteilhaft die Abgase wenigstens eines Motors des Blockheizkraftwerkes. Die Abgase haben eine hohe Temperatur, beispielsweise in der Höhe von etwa 480°C, so dass dieser hohe Energiegehalt optimal dazu genutzt werden kann, das Trocknungsmedium auf die gewünschte Trocknungstemperatur zu erwärmen. Der Motor des Blockheizkraftwerkes arbeitet in der Regel mit hoher Leistung. Dadurch steht ausreichend Abwärme mit der erforderlichen hohen Temperatur zur Verfügung, um das Trocknungsmedium der Vorrichtung über eine lange Einsatzdauer zuverlässig auf die Trocknungstemperatur zu erwärmen. Als Abwärme des Blockheizkraftwerkes kann auch das Kühlmedium verwendet werden, mit welchem der Motor des Blockheizkraftwerkes gekühlt wird. Das Kühlmedium hat Temperaturen im Bereich von etwa 80 bis 95°C. Dieser Energieinhalt kann ebenfalls dazu herangezogen werden, Teile der Vorrichtung mit entsprechender Wärmeenergie zu versorgen. Vorteilhaft wird das Kühlmedium wenigstens einer Kältemaschine zugeführt.

Die Kältemaschine ist vorteilhaft eine Absorptions-Kältemaschine, mit der ein Kühlmedium wenigstens einer Verarbeitungsmaschine der Vorrichtung gekühlt wird. Das Kühlmedium der Verarbeitungsmaschine wird durch die Kältemaschine direkt oder indirekt auf die gewünschte Kühltemperatur abgekühlt.

Die Vorrichtung weist für das Trocknungsmedium wenigstens eine Trocknungseinrichtung auf, die dafür sorgt, dass das Trocknungsmedium vor dem Eintreten in den Trocknungsbehälter ausreichend trocken ist. Hierzu dient die wenigstens eine Entfeuchtungseinheit, die aus dem Trocknungsmedium die nach dem Durchgang durch die Kunststoff-Ausgangsstoffe aufgenommene Feuchtigkeit aufnimmt.

Die Entfeuchtungseinheit ist in einen Regenerationskreislauf schaltbar. Wenn die Entfeuchtungseinheit so mit Feuchtigkeit beladen ist, dass sie keine weitere Feuchtigkeit mehr aufnehmen kann, wird sie in den Regenerationskreislauf geschaltet. Dann wird die Entfeuchtungseinheit regeneriert, indem ihr die Feuchtigkeit wieder entzogen wird. Anschließend wird die Entfeuchtungseinheit wieder zum Entfeuchten des Trocknungsmediums herangezogen. Vorteilhaft ist mit dem Motor des Blockheizkraftwerkes wenigstens ein Generator antriebsverbunden. Da der Motor in der Regel mit hoher Leistung läuft, erzeugt der Generator entsprechend große Strommengen. Dieser elektrische Strom kann zur Versorgung elektrischer/elektronischer Komponenten in der Vorrichtung verwendet werden. Solche Komponenten sind beispielsweise Motoren von Gebläsen, elektrische Heizelemente, Sensoren, und Ventile. Sie können auf diese Weise kostengünstig mit dem erforderlichen Strom versorgt werden. Eventuell vorhandener überschüssiger elektrischer Strom kann in das öffentliche Stromnetz eingespeist werden.

Eine noch bessere Energieausnutzung ergibt sich, wenn überschüssige Restenergie anderen Prozessen im Umfeld des Kunststoff-Verarbeitungsprozesses zugeführt wird.

Beim erfindungsgemäßen Verfahren wird zum Trocknen des Kunststoff-Ausgangsstoffes die Abwärme und/oder der erzeugte Strom wenigstens eines Blockheizkraftwerkes herangezogen. Wenigstens ein Teil der Abwärme wird über einen Wärmetauschprozess indirekt über Wärmetauscher auf ein Trocknungsmedium übertragen, das zum Trocknen des Kunststoff-Ausgangsstoffes verwendet wird. Das Trocknungsmedium wird dem wenigstens einen Trocknungsbehälter der Vorrichtung zugeführt, nach dem Durchtritt durch den Kunststoff-Ausgangsstoff als Rückluft gekühlt und anschließend getrocknet und regeneriert, indem das mit Feuchtigkeit beladene Trocknungsmedium durch Entfeuchtungseinheiten geführt wird. Die getrocknete und regenerierte Rückluft wird auf Trocknungstemperatur erwärmt und dem Trocknungsbehälter erneut zugeführt.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in schematischer Darstellung das Funktionsprinzip der erfindungsgemäßen Anlage,
- Fig. 2: in schematischer Darstellung die Stoffströme eines Blockheizkraftwerkes der erfindungsgemäßen Anlage,
- Fig. 3: in vereinfachter Darstellung einen Schaltplan der erfindungsgemäßen Anlage,
- Fig. 4: ein Ausführungsbeispiel der erfindungsgemäßen Anlage.

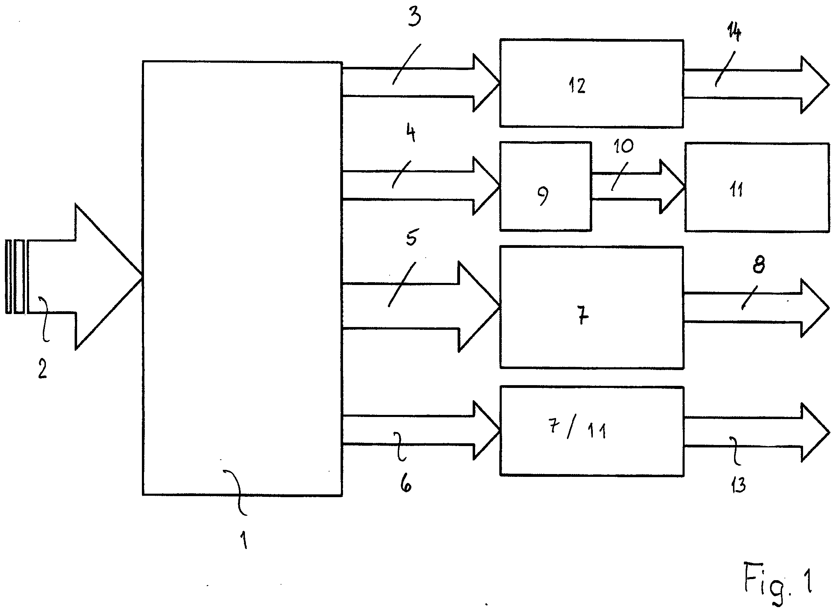

Die im Folgenden beschriebene Anlage bildet ein System zur Steigerung der Energieeffizienz bei der Kunststoffverarbeitung. Die Anlage hat wenigstens ein Blockheizkraftwerk 1, mit dem Treibstoff 2 in elektrische und/oder thermische Energie umgewandelt wird. Als Treibstoff 2 kommen fossile Brennstoffe, wie Erdgas, LPG, Diesel und Benzin, aber auch regenerativer Brennstoff in Betracht, wie Biogas, Klärgas und Wasserstoff. In Fig. 1 sind beispielhaft drei Wärmeströme 3 bis 5 und ein elektrischer Strom 6 dargestellt, die bei der Umwandlung des Brennstoffes 2 durch das Blockheizkraftwerk 1 entstehen. Die thermische Energie in Form der Wärmeströme 3 bis 5 wird für nachfolgende Prozesse bedarfsgerecht in einen Stoffstrom eines definierten Temperaturniveaus oder in mehrere Stoffströme unterschiedlicher Temperaturniveaus aufgespaltet. In Fig. 1 sind die unterschiedlichen Temperaturniveaus der Wärmeströme 3 bis 5 durch die Dicke der Pfeile veranschaulicht. Der Wärmestrom 5 hat im Beispielsfall das höchste Temperaturniveau. Dementsprechend wird dieser Wärmestrom 5 für eine Materialkonditionierung 7 eingesetzt. Die Materialkonditionierung kann beispielhaft eine Trocknung oder eine Kristallisation sein. Im Beispielsfall ist angenommen, dass nicht der gesamte Wärmestrom 5 für die Materialkonditionierung 7 verwendet wird, so dass noch ein Teil 8 an Restenergie verbleibt. Diese Restenergie kann gegebenenfalls weiteren externen Prozessen zur Nutzung zugeführt werden.

Der Wärmestrom 4 hat ein geringeres Temperaturniveau als der Wärmestrom 5 und wird beispielsweise einer Absorptionskältemaschine 9 zugeführt, mit der der Wärmestrom 4 in einen Kältestrom 10 umgewandelt wird. Er wird beispielhaft für einen Kunststoffverarbeitungsprozess 11 verwendet. Der Wärmestrom 3 hat das geringste Temperaturniveau und wird beispielsweise zur Vortemperierung oder Vortrocknung eines zu verarbeitenden Kunststoffes 12 herangezogen. Beispielsweise kann der Wärmestrom 3 aber auch zur Hydrauliköltemperierung der Verarbeitungsmaschine oder einem anderen Prozess außerhalb des Systems zugeführt werden.

Die vom Blockheizkraftwerk 1 erzeugte elektrische Energie 6 wird ganz oder teilweise bei der Materialkonditionierung 7 und/oder im Kunststoffverarbeitungsprozess 11 eingesetzt. Bei der Materialkonditionierung 7 kann der elektrische Strom 6 beispielsweise für eine elektrische Zusatzheizung, für die elektrische Heizung im Regenerierkreis der Entfeuchtungseinheiten 94, für einen Gebläseantrieb und für einen Steuerstrom verwendet werden. Im Kunststoffverarbeitungsprozess 11 kann der elektrische Strom 6 als Heizenergie für die Plastifizierung des Kunststoffgranulates und für Motorantriebe der Kunststoffverarbeitungsmaschine verwendet werden.

Der nicht benötigte Anteil 13 des elektrischen Stromes 6 kann lokal im Umfeld der Anlage verwendet oder zum öffentlichen Stromnetz zurückgeführt werden.

Die bei den gezeigten Abläufen nicht benötigte Wärme 14, 8 wird in geeigneter Weise anderen Prozessen zugeführt.

Sollte das Blockheizkraftwerk 1 nicht ausreichend thermische und/oder elektrische Energie erzeugen, dann wird diese fehlende Energie von außen zugeführt.

Zur Erzeugung der Wärmeströme 3 bis 5 werden eine oder mehrere Komponenten des Blockheizkraftwerkes 1 herangezogen, wie der Abgasstrom, interne Kühlkreisläufe, Ladeluftkühler und Gemischkühler. Die beim Betrieb des Blockheizkraftwerkes 1 anfallenden Energieströme 3 bis 6 werden bedarfsgerecht in die Wärmeströme 3 bis 5 und den elektrischen Strom 6 aufgespalten. Diese Energieströme 3 bis 6 werden ganz oder auch nur teilweise der Materialkonditionierung 7 sowie einem nachgelagerten Verarbeitungsprozess zugeführt, so dass dieser Prozess ganz oder teilweise autonom betrieben werden kann. Somit werden die beim Betrieb des Blockheizkraftwerkes 1 anfallenden Energieströme nutzvoll verwendet, so dass eine hervorragende Energieverwertung gegeben ist.

Das Blockheizkraftwerk 1 kann unterschiedlich ausgestaltet sein. So kann es einen Verbrennungsmotor mit oder ohne Turboaufladung, mit oder ohne Gemischkühlung, und eine Turbine mit oder ohne Rekuperation aufweisen. Je nach Art des eingesetzten Energieträgers, wie Erdgas, LPG, Diesel, Benzin, Biogas, Klärgas oder Wasserstoff, ergeben sich weitere unterschiedliche Ausgestaltungen des Systems.

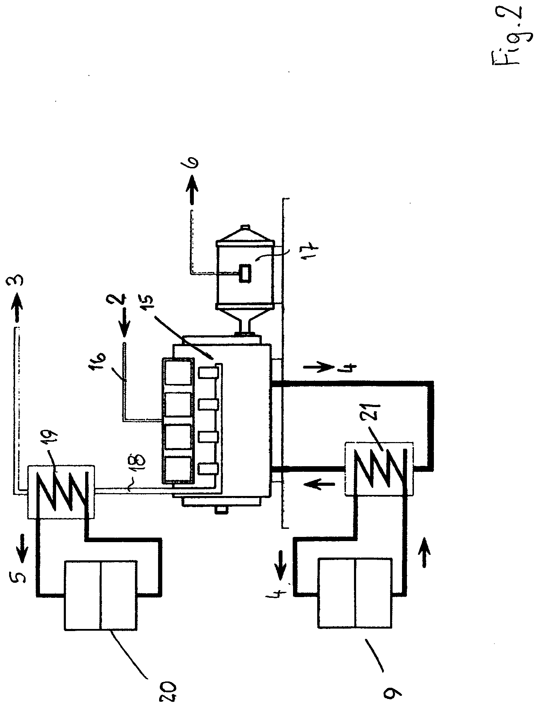

Fig. 2 zeigt beispielhaft einen Motor 15 des Blockheizkraftwerkes 1, dem der Treibstoff 2 über wenigstens eine Leitung 16 zugeführt wird. Das Blockheizkraftwerk 1 ist außerdem mit wenigstens einem Generator 17 versehen, der mit dem Motor 15 gekoppelt ist und elektrischen Strom 6 liefert.

Über einen Auspuff 18 werden die Abgase des Motors 15 einem Abgas-Wärmetauscher 19 zugeführt. Die Abgastemperatur liegt beispielhaft bei etwa 500°C. Mittels des Abgases wird im Wärmetauscher 19 ein Trocknungsmedium aufgeheizt. Es wird beispielsweise zur Trocknung von Kunststoffgranulat herangezogen. Das Trocknungsmedium wird vorteilhaft im Kreislauf geführt und durch die Abgase des Motors 15 erwärmt, beispielsweise auf etwa 170°C. Nach dem Durchgang durch die Kunststoffgranulatschüttung sowie der anschließenden Entfeuchtung hat das Trocknungsmedium beispielhaft noch eine Temperatur von 60°C. Mittels des Wärmetauschers 19 wird die Temperatur wieder auf etwa 170°C erwärmt. Die Abgase kühlen beispielsweise auf etwa 170°C ab und erzeugen den Wärmestrom 3.

Für den Kreislauf des Trocknungsmediums ist schematisch ein Trocknungsbehälter 20 dargestellt, in dem das zu trocknende Medium gelagert ist. Das über den Wärmetauscher 19 laufende Medium ist der Wärmestrom 5, der zur Materialkonditionierung 7 herangezogen wird.

Der Wärmestrom 4 wird aus dem Kühlmedium des Motors 15 erzeugt. Das Kühlmedium, wie Kühlwasser, hat beim Austritt aus dem Motor 15 beispielsweise eine Temperatur von etwa 95°C. Es durchläuft einen Wärmetauscher 21, in dem das Medium der Kältemaschine 9 erwärmt wird. Beim Austritt aus dem Wärmetauscher 21 hat das Kühlmedium eine Temperatur von etwa 80°C. In der Kältemaschine 9 wird die Temperatur des Mediums herabgesetzt, beispielsweise auf etwa 70°C. Mit dieser Temperatur gelangt dieses Medium in den Wärmetauscher 21. Das Medium wird somit beim Durchlauf durch den Wärmetauscher 21 durch das Kühlmedium des Motors 15 stets erwärmt.

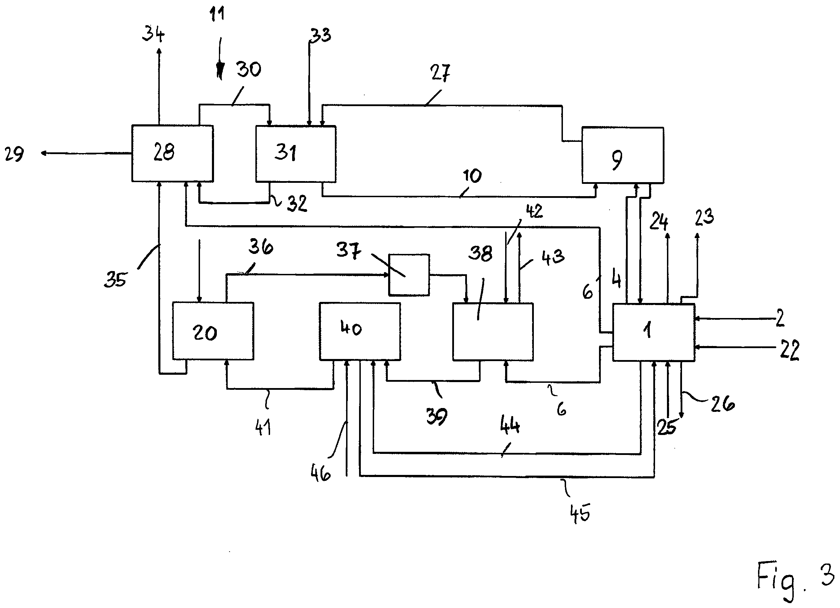

Fig. 3 zeigt die Verknüpfung der verschiedenen Energieströme der Anlage. Dem Blockheizkraftwerk 1 werden der Treibstoff 2 sowie Umgebungsluft 22 zugeführt. Im Ausführungsbeispiel wird als Treibstoff Erdgas verwendet, das beispielsweise in einer Menge von 30m³n/h zugeführt wird. Die Umgebungsluft 22 wird beispielsweise mit einer Menge von 550 m³n/h dem Blockheizkraftwerk zugeführt. Die beim Betrieb des Blockheizkraftwerkes 1 entstehende Abluft 23 strömt nach außen. Im Ausführungsbeispiel hat die Abluft 23 eine Ablufttemperatur von etwa 200°C. Weiter ist durch den Pfeil 24 die Wärmeabstrahlung des Blockheizkraftwerkes 1 angegeben. Zur Kühlung des Blockheizkraftwerkes wird ein Kühlmedium 25 zugeführt, das über eine Rückführleitung 26 aus dem Blockheizkraftwerk herausgeführt wird.

Die im Blockheizkraftwerk 1 entstehende Prozesswärme in Form des Wärmestroms 4 wird der Kältemaschine 9 zugeführt. Das zum Betrieb der Kältemaschine 9 erforderliche Kältemedium gelangt über die Leitung 10 vom Kunststoffverarbeitungsprozess 11 in die Kältemaschine 9. Das Kältemittel hat beispielsweise eine Temperatur von etwa 12°C. In der Kältemaschine 9 wird die Temperatur des Kühlmittels durch Umwandlung der Wärmeenergie auf beispielsweise 6°C verringert. Dieses abgekühlte Kältemittel wird über eine Rückführleitung 27 dem Kunststoffverarbeitungsprozess 11 zugeführt. Hierbei wird wenigstens eine Kunststoffverarbeitungsmaschine 28 eingesetzt, mit der aus Kunststoffgranulat Kunststoffteile hergestellt werden, die über eine Abgabe 29 der Verarbeitungsmaschine 28 entnommen werden. Der Verarbeitungsprozess 11 und die Verarbeitungsmaschine 28 wird mittels eines Kühlmediums gekühlt, das im Kreislauf durch die Verarbeitungsmaschine 28 geführt wird. Das Kühlmedium wird in der Verarbeitungsmaschine 28 erwärmt und über wenigstens eine Leitung 30 wenigstens einer Wärmetauscheinheit 31 zugeführt. Beim Durchlauf des Kühlmediums durch die Wärmetauscheinheit 31 wird die Wärme an das über die Rückführleitung 27 zugeführte Kältemittel abgegeben, das entsprechend erwärmt wird und über die Leitung 10 der Kältemaschine 9 zurückgeführt wird. Das Kühlmedium wird nach Durchlauf der Wärmetauscheinheit 31 über wenigstens eine Leitung 32 dem Verarbeitungsprozess 11 und der Verarbeitungsmaschine 28 mit entsprechend geringerer Temperatur zugeführt.

Auf die beschriebene Weise werden das Kältemittel für die Kältemaschine 9 und das Kühlmedium für die Verarbeitungsmaschine 28 jeweils im Kreislauf geführt, wobei mit Hilfe der Wärmetauscheinheit 31 die Wärmeübertragung zwischen den beiden Medien vorgenommen wird.

Sollte die Energie für den Betrieb der Wärmetauscheinheit 31 nicht ausreichen, kann gegebenenfalls über wenigstens eine Leitung 33 Hilfsenergie ergänzend zugeführt werden.

Die von der Verarbeitungsmaschine 28 erzeugte Wärmeabstrahlung ist in Fig. 3 durch den Pfeil 34 gekennzeichnet.

Das zur Herstellung der Kunststoffteile erforderliche Kunststoffgranulat wird über wenigstens eine Förderleitung 35 aus wenigstens einem Trocknungsbehälter 20 zugeführt. Das Kunststoffgranulat im Trocknungsbehälter 20 wird von einem gasförmigen Trocknungsmedium durchströmt, das in der Regel Luft ist. Dieses Trocknungsmedium ist so vorgetrocknet und erwärmt, dass dem Kunststoffgranulat die Feuchtigkeit entzogen wird, so dass es den für die einwandfreie Verarbeitung der Maschine 28 notwendigen Trocknungsgrad hat. Das Trocknungsmedium wird so weit und/oder so lange mit dem Kunststoffgranulat in Kontakt gebracht, dass es nicht übertrocknet oder überhitzt und damit geschädigt wird. Das Trocknungsmedium kann die im Trocknungsbehälter 20 befindliche Kunststoffgranulatschüttung in bekannter Weise durchströmen, beispielsweise von unten nach oben oder radial. Nach dem Durchtritt durch die Kunststoffgranulatschüttung tritt das Trocknungsmedium als Rückluft über wenigstens eine Rückführleitung 36 aus dem Trocknungsbehälter 20 aus. Sie enthält die dem Kunststoffgranulat entnommene Feuchtigkeit und hat beispielhaft eine Temperatur von etwa 80°C. Die Rückluft wird über die Leitung 36 einem Kühler 37 zugeführt, mit dem die Rückluft abgekühlt wird, beispielsweise auf etwa 40°C. Die gekühlte Rückluft gelangt in eine Trocknungs- und Regeneriereinheit 38, in der der Rückluft ihre Feuchtigkeit entzogen wird. Über wenigstens eine Leitung 39 gelangt die vorgetrocknete Rückluft zu wenigstens einer Heizeinheit 40, in der die Rückluft auf die erforderliche Temperatur zur Trocknung des Trockengranulates erwärmt wird, die beispielsweise 180°C beträgt. Die auf diese Weise regenerierte Rückluft tritt erneut als Prozessluft über wenigstens eine Leitung 41 in den Trocknungsbehälter 20 ein. Beim Durchströmen der Kunststoffgranulatschüttung nimmt die Trocknungsluft wieder Feuchtigkeit auf und strömt dann über die Rückluftleitung 36 in der beschriebenen Weise zurück. Auf diese Weise wird das Trocknungsmedium im Kreislauf geführt. Wenn das Kunststoffgranulat im Trocknungsbehälter 20 ausreichend entfeuchtet ist, wird das Granulat dem Trocknungsbehälter 20 in bekannter Weise entnommen und der Verarbeitungsmaschine 28 zugeführt.

Der Trocknungs- und Regeneriereinheit 38 wird der elektrische Strom 6 aus dem Blockheizkraft 1 zugeführt. Außerdem wird auch die Verarbeitungsmaschine 28 mit dem durch das Blockheizkraftwerk 1 erzeugten Strom 6 versorgt.

Der Trocknungs- und Regeneriereinheit 38 wird außerdem Umgebungsluft 42 zugeführt. Mit dem Pfeil 43 ist die Abluft der Regeneriereinheit 38 bezeichnet.

Die zum Betrieb der Heizeinrichtung 40 erforderliche Energie wird direkt oder indirekt, beispielsweise in Form von Thermal-Öl, aus dem Blockheizkraftwerk 1 über wenigstens eine Leitung 44 zugeführt. Das Thermal-Öl hat beim Austritt aus dem Blockheizkraftwerk eine hohe Temperatur von beispielsweise etwa 200°C. In der Heizeinheit 40 gibt das Thermal-Öl seine Wärme an das die Heizeinheit 40 durchströmende Trocknungsmedium für den Trocknungsbehälter 20 ab. Das Thermal-Öl wird dadurch abgekühlt und über wenigstens eine Leitung 45 zum Blockheizkraftwerk 1 zurückgeleitet. Das Thermal-Öl wird somit im Kreislauf geführt und trägt dazu bei, das zum Trocknen des im Trocknungsbehälter 20 befindlichen Kunststoffgranulates vorgesehene Trocknungsmedium energiegünstig auf die gewünschte Trocknungstemperatur zu erwärmen.

Alternativ zur beschriebenen indirekten Beheizung der Heizeinheit 40 für das Trocknungsmedium für den Trocknungsbehälter 20 wird bei der direkten Beheizung die Heizeinheit 40 direkt vom Abgas des Blockheizkraftwerkes 1 beheizt. Der Zwischenkreis mit einem Wärmetransport über Thermal-Öl kann in diesem Fall entfallen.

Alternativ zum beschriebenen thermischen Energiestrom kann der Heizeinheit 40 auch elektrische Energie (Pfeil 46) zugeführt werden. Vorteilhaft ist es, wenn diese elektrische Energie aus dem elektrischen Strom 6 des Blockheizkraftwerkes 1 erzeugt wird.

Das beschriebene Ausführungsbeispiel zeigt, dass die beim Betrieb des Blockheizkraftwerkes 1 anfallenden Energieströme 3 bis 6 optimal bei der Kunststoffverarbeitung eingesetzt werden können. Dadurch wird die Energiebilanz des Blockheizkraftwerkes 1 erheblich verbessert, während die Energiekosten zur Herstellung der Kunststoffteile erheblich verringert werden. Zusätzlich bietet sich noch die Möglichkeit Restwärmeströme 14, 8 anderen Prozessen auf einfache Weise zugänglich zu machen.

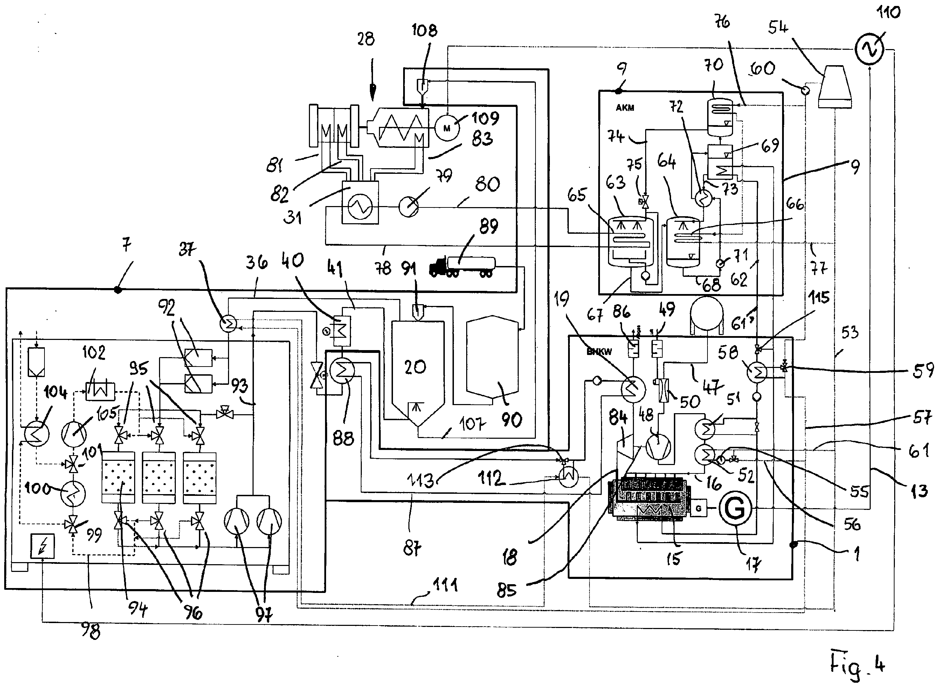

Fig. 4 zeigt im Einzelnen eine solche Anlage. Sie besteht aus drei Komponenten, nämlich dem Blockheizkraftwerk 1 mit dem Motor 15 und dem Generator 17, der Kältemaschine 9 und der Materialkonditionierung 7.

Der zum Betrieb des Blockheizkraftwerkes 1 erforderliche Treibstoff wird über die Leitung 16 dem Motor 15 zugeführt. Im Ausführungsbeispiel dient als Treibstoff Erdgas, das über eine Leitung 47 vom Verdichter 48 einer Turbo-Lader-Einheit 84; 48 angesaugt wird. Dem Treibstoff wird außerdem Luft 49 über eine Düse 50 beigemischt. Dieses Treibstoffgemisch wird über zwei hintereinander liegende Luftkühler 51, 52 und die Leitung 16 dem Motor 15 zugeführt.

Der Kühler 54 dient allgemein zur Abführung von Restenergie 14, 8 bzw. der Wärmeströme 3, 5, falls diese nicht anderweitig verwendet werden, sowie des Wärmestroms 4, falls keine Energie zur Kältemaschine 9 geführt wird (Notbetrieb). Weiterhin stellt er Kühlleistung für den Absorber 64 und den Kondensator 70 der Kältemaschine 9 sowie den Kühler 37 der Materialkonditionierung 7. Die Wirkweisen sind wie folgt.

Der Luftkühler 52 ist an eine Kühlmittelleitung 53 angeschlossen. Das Kühlmittel wird durch wenigstens einen Kühler 54 gekühlt. Zum Transport des Kühlmittels durch den Luftkühler 52 dient eine Pumpe 55, die in einer Leitung 56 sitzt, mit der der Luftkühler 52 an eine Leitung 57 angeschlossen ist. Sie ist mit dem Kühler 54 strömungsverbunden und dient als Zuleitung des Kühlmittels zum Luftkühler 52. In der Leitung 57 sitzen ein Schaltventil 59 und eine Pumpe 60, mit dem das Kühlmedium über den Kühler 54 gefördert wird.

An die Leitung 57 ist ein Wärmetauscher 58 angeschlossen. Das Schaltventil 59 kann so geschaltet sein, dass das Kühlmedium unter Umgehung des Wärmetauschers 58 über die Leitung 56 zum Luftkühler 52 gelangt. Er ist über eine Leitung 61 an die Kühlmittelleitung 53 angeschlossen, über die das Kühlmittel wieder zurück zum Kühler 54 gefördert wird. Der Wärmetauscher 58 dient zur Notkühlung des Motors 15 und des Luftkühlers 51, falls die Kältemaschine 9 nicht in Betrieb ist oder anderweitig keine Energie abnehmen kann.

An die Leitung 57 ist ein weiterer Wärmetauscher 112 angeschlossen, der über ein Schaltventil 113 an die Leitung 87 angeschlossen werden kann, über die das Wärmemedium zwischen dem Abgas-Wärmetauscher 19 und dem Wärmetauscher 88 im Kreislauf geführt wird. Ist das Schaltventil 113 entsprechend geschaltet, wird das durch die Leitung 111 strömende Kühlmedium erwärmt. Es gelangt anschließend in die Leitung 53, mit der das Kühlmedium zurück zum Kühler 54 gefördert wird. Der Wärmetauscher 112 dient zur Notkühlung des Systems, falls die Materialkonditionierung 7 nicht in Betrieb ist oder anderweitig keine Energie abnehmen kann.

Mit dem Luftkühler 51 sowie dem internen Kühlsystem des Motors 15 wird das in einer Rückführleitung 61' zum Motor 15 von der Kältemaschine 9 zurückströmende Kühlmedium auf der für den Betrieb der Kältemaschine 9 erforderlichen Temperatur gehalten.

Die Kältemaschine 9 ist beispielsweise eine Absorptionskältemaschine, die an sich bekannt ist und darum auch nicht im Einzelnen beschrieben wird. Sie hat einen Lösungsmittel- und einen Kältemittelkreis. Das Arbeitsmittel besteht aus einem Lösungsmittel und einem darin gelösten Kältemittel. Vorteilhaft wird als Kältemittel Wasser und als Lösungsmittel eine wässrige LiBr-Lösung eingesetzt. Durch Vakuumbetrieb sind bei Wasser als Kältemittel Verdampfungstemperaturen beispielsweise bis etwa 3°C zu erreichen. Je nach gewünschten Temperaturen können als Kältemittel auch andere Mittel, beispielsweise NH₃ und Wasser als Lösungsmittel eingesetzt werden.

Die Kältemaschine 9 hat einen Verdampfer 63, bei dem Wasser als Kältemittel in einem nahezu evakuierten Behältnis auf eine Rohrschlange 65 gesprüht wird. Hierbei verdampft das Wasser bei etwa 3°C. Der Wasserdampf des Verdampfers 63 wird über eine Leitung 67 dem Absorber 64 zugeführt. Der Absorber 64 dient dazu, das Kältemedium Wasserdampf durch Berieselung mit wasserarmem, d.h. höher konzentriertem Lösungsmittel zu absorbieren und wieder in Lösung zu bringen (thermische Verdichtung). Über eine Leitung 68 wird diese wasserreiche, d.h. schwächer konzentrierte Lösung einem Austreiber 69 zugeführt. In ihm wird durch Erwärmung der zugeführten schwächer konzentrierten Lösung das Kältemittel Wasser verdampft und einem nachgeschalteten Kondensator 70 zugeführt. Im Kondensator 70 wird der Wasserdampf zu Wasser als Kältemittel kondensiert. Im Austreiber 69 verbleibt wasserarme, d.h. höher konzentriertes Lösungsmittel.

In der Leitung 68 sitzen eine Pumpe 71 zum Fördern des wasserreichen, d.h. schwächer konzentrierten Lösungsmittels sowie ein Wärmetauscher 72. Er wird auch von der im Austreiber 69 gebildeten Flüssigkeit über eine Leitung 73 durchströmt. Im Wärmetauscher 72 erfolgt somit ein Wärmeübergang zwischen der aus dem Absorber 64 kommenden schwachen Lösung und dem aus dem Austreiber 69 kommenden höher konzentrierten Lösungsmittel.

Das im Austreiber 69 und Kondensator 70 zurückgebildete Lösungs- bzw. Kältemittel wird über die Leitungen 73, 74 dem Verdampfer 63bzw. Absorber 64 zugeleitet, so dass sie dort wieder in der beschriebenen Weise zum Einsatz kommen Die Einleitung des Kältemittels Wasser in den Verdampfer 63 erfolgt über ein Regelventil 75.

Von der Leitung 57 zweigt eine Zuführleitung 76 ab, über die ein Kühlmedium nacheinander dem Kondensator 70 und dem Absorber 64 zugeführt wird. Über die Rückleitung 77 strömt das Kühlmedium in die Leitung 53 zurück.

Die Leitung 62, durch die das Kühlmedium aus dem Motor 15 ausgeleitet wird, wird dem Austreiber 69 zugeleitet, von dem es über die Leitung 62 zum Motor 15 zurückgeführt wird. Über diese Leitung erfolgt die Weitergabe des Wärmestroms 4 an die Kältemaschine 9.

Das Kältemittel des Verdampfers 63 strömt über eine Leitung 78 nacheinander durch die Wärmetauscheinheit 31 und eine nachgeschaltete Pumpe 79. Über eine Leitung 80 strömt das Medium zurück zum Verdampfer 63. Auf diese Weise wird das Medium im Kreislauf geführt und dazu verwendet, mittels der Wärmetauscheinheit 31 das für den Kunststoffverarbeitungsprozess in der Verarbeitungsmaschine 28 benötigte Kühlmedium abzukühlen. In Fig. 4 sind beispielhaft drei Kühlmittelkreisläufe 81 bis 83 der Verarbeitungsmaschine 28 dargestellt. Sie sind durch die Wärmetauscheinheit 31 geführt und werden durch das Kältemittel des Verdampfers 63 ausreichend gekühlt. Das Kältemittel seinerseits wird in der Kältemaschine wieder auf die erforderliche Temperatur abgekühlt.

Mit dem aus der Abgasleitung 18 des Motors 15 ausströmenden Abgas wird eine Abgasturbine 84 betrieben, über deren Welle 85 ein Verdichter 48 angetrieben wird. Beide Einheiten 84 und 48 zusammen bilden einen Abgasturbolader. Die heißen Abgase strömen durch den Abgas-Wärmetauscher 19 und von dort, vorzugsweise über einen Filter 86, ins Freie, sofern die Restenergie nicht einem anderen Prozess noch zugeführt wird. Der Abgas-Wärmetauscher 19 liegt in einem Kreislauf 87, in den ein geeignetes Wärme übertragendes Medium, beispielsweise Thermal-Öl oder Luft, strömt. Der Kreislauf 87 enthält einen zweiten Wärmetauscher 88, durch den die Trocknungsluft zum Trocknen der im Trocknungsbehälter 20 befindlichen Kunststoffgranulatschüttung geleitet wird. Bei einer direkten Beheizung entfällt dieser Zwischenkreis und die Trocknungsluft für den Trocknungsbehälter 20 wird direkt über den Wärmetauscher 19 geführt.

Das zu verarbeitende Kunststoffgranulat wird mit einem geeigneten Transportfahrzeug 89 angefahren und in wenigstens einen Vorratsbehälter 90 eingebracht. Von ihm aus wird mittels einer Fördereinheit 91 das Kunststoffgranulat vorzugsweise direkt von oben in den Trocknungsbehälter 20 transportiert. Das Trocknungsmedium wird über die Leitung 41 von unten oder radial in den Trocknungsbehälter 20 eingeführt. Das Trocknungsmedium durchströmt das Kunststoffgranulat und nimmt hierbei Feuchtigkeit auf. Am oberen Ende des Trocknungsbehälters 20 strömt die mit Feuchtigkeit beladene Rückluft in die Rückführleitung 36. Im Kühler 37 erfolgt eine Rückkühlung der aus dem Trocknungsbehälter 20 strömenden Rückluft. Anschließend strömt die Rückluft durch zwei parallel geschaltete Filter 92 und Entfeuchtungseinheiten 94 und von dort über eine Leitung 93 über die Heizeinheit 40 in die Leitung 41. Mit der Heizeinrichtung 40 wird das Trocknungsmedium auf die zum Trocknen des Granulates im Trocknungsbehälter 20 erforderliche Temperatur erwärmt.

Die Rückluft durchströmt eine oder mehrere von mehreren Entfeuchtungseinheiten 94. Im Ausführungsbeispiel sind beispielhaft drei solcher Entfeuchtungseinheiten 94 vorgesehen. Von diesen sind im gezeigten Beispiel die beiden rechten in den Entfeuchtungsprozess eingebunden.

Beim Durchtritt der Rückluft durch die jeweilige Entfeuchtungseinheit 94 wird ihr die Feuchtigkeit entzogen, bevor sie über die Leitung 93 in Richtung auf den Trocknungsbehälter 20 strömt. Die Zuleitungen zu den Entfeuchtungseinheiten 94 können durch Schaltventile 95 gesperrt oder freigegeben werden. Auch in den aus den Entfeuchtungseinheiten 94 führenden Leitungen sitzen Schaltventile 96, mit denen die Verbindung zwischen den Entfeuchtungseinheiten und der Leitung 93 gesperrt bzw. freigegeben werden kann. In der Leitung 93 sitzt wenigstens ein Gebläse 97. Im Ausführungsbeispiel sind zwei solcher Gebläse 97 parallel geschaltet.

Mit Hilfe der Schaltventile 95, 96 ist es möglich, einige oder nur einzelne der Entfeuchtungseinheiten 94 aus dem Trocknungsmedium-Kreislauf herauszunehmen, um diese Entfeuchtungseinheiten zu regenerieren. So können beispielsweise die Schaltventile 96 der in Fig. 4 linken Entfeuchtungseinheit 94 so geschaltet werden, dass die aus dieser Entfeuchtungseinheit 94 strömende Luft in die Leitung 98 gelangt. Das in der Leitung 98 sitzende Ventil 99 wird so geschaltet, dass die Regenerationsluft über einen Wärmetauscher 104 nach außen gelangt. Gleichzeitig wird neues Regenerationsmedium von außen zugeführt, über den Wärmetauscher 104 vorgewärmt und über ein nachgeschaltetes Ventil 101 mittels eines Gebläses 105 zu einer Heizeinheit 102 geführt. Mit ihr wird das Regenerationsmedium auf die erforderliche Regenerationstemperatur erwärmt. Die Schaltventile 95 sind so geschaltet, dass das auf die Regenerationstemperatur erwärmte Regenerationsmedium der linken Entfeuchtungseinheit 94 zugeführt wird. Das Regenerationsmedium entzieht der Entfeuchtungseinheit die Feuchtigkeit, bis diese Entfeuchtungseinheit nach einer Abkühlphase wieder in den Trocknungskreislauf geschaltet werden kann.

Während der Regeneration der Entfeuchtungseinheit sind die in Fig. 4 beiden rechten Entfeuchtungseinheiten 94 in den Trocknungskreislauf geschaltet, so dass die mit Feuchtigkeit beladene, vom Trocknungsbehälter 20 kommende Rückluft durch diese Entfeuchtungseinheiten 94 strömt und dabei entfeuchtet wird. Sobald eine dieser Entfeuchtungseinheiten so weit mit Feuchtigkeit beladen ist, dass eine ausreichende Entfeuchtung der Rückluft nicht mehr möglich ist, werden die ihr zugeordneten Ventile 95, 96 so geschaltet, dass nunmehr diese Entfeuchtungseinheit in den Regenerationskreis geschaltet wird und die frisch regenerierte in den Trocknungskreislauf übergeht.

Auf diese Weise ist es gleichzeitig möglich, jeweils eine Entfeuchtungseinheit 94 zu regenerieren, während die übrigen Entfeuchtungseinheiten zum Entfeuchten des Trocknungsmediums herangezogen werden.

Sowohl das Trocknungsmedium als auch das Regenerationsmedium werden in der beschriebenen Weise jeweils im Kreislauf geführt.

Während der Abkühlphase der Entfeuchtungseinheit 94 sind die Schaltventile 99, 101 so geschaltet, dass Gebläse 105 einen Luftstrom über die zu kühlende Entfeuchtungseinheit 94 und den Wärmetauscher 100 bei ausgeschalteter Heizeinheit 102 zirkulieren lässt. Durch das Abkühlen der zirkulierenden Luft am Wärmetauscher 100 wird die Entfeuchtungseinheit 94 nach und nach auf das für das Entfeuchten des Trockenmediums notwendige Temperaturniveau zurückgekühlt.

Wenn das Kunststoffgranulat im Trocknungsbehälter 20 ausreichend getrocknet ist, wird es über eine Förderleitung 107 vom Trocknungsbehälter 20 einer Beschickungsvorrichtung 108 zugeführt, die vorteilhaft auf der Verarbeitungsmaschine 28 sitzt. Sie kann beispielsweise eine Spritzgießmaschine oder eine Extrusionsanlage sein.

Ein oder mehrere Motoren 109 der Verarbeitungsmaschine 28 können vom öffentlichen Stromnetz 110 mit Strom versorgt werden, vorzugsweise mit dem vom Generator 17 erzeugten Strom 13.

Auch die elektrischen/elektronischen Elemente der Trocknungs/Regenerationseinrichtung können vom öffentlichen Stromnetz 110 mit dem notwendigen Strom versorgt werden, vorzugsweise aber mit dem Strom 13.

Der vom Generator 17 des Blockheizkraftwerkes 1 erzeugte überschüssige Strom 13 wird dem öffentlichen Stromnetz 110 zugeführt.

Ein Teil des vom Kühler 54 kommenden Kühlmediums strömt über die Leitung 57 zum Kühler 37, in dem ein Wärmeaustausch zwischen der vom Trocknungsbehälter 20 über die Leitung 36 strömenden Rückluft und dem Kühlmedium stattfindet.

In der Leitung 62 sitzt zwischen dem Austreiber 69 und dem Wärmetauscher 58 ein Schaltventil 115, mit dem eine Strömungsverbindung zwischen der Leitung 62 und der Rückführleitung 61 bei Bedarf hergestellt werden kann. Auf diese Weise kann die Verbindung vom Blockheizkraftwerk 1 zur Kältemaschine 9 unterbrochen werden. Es ist dann die schon beschriebene Notkühlung über Wärmetauscher 58 notwendig.

Auf die beschriebene Weise werden die verschiedenen Wärmeströme und elektrischen Ströme zum Betrieb der Vorrichtung eingesetzt. Die Energiebilanz des Blockheizkraftwerkes wird dadurch erheblich erhöht, während die Energiekosten zum Betrieb der beschriebenen Vorrichtung erheblich gesenkt werden können.

## Patentansprüche

1. Anlage mit wenigstens einer Vorrichtung (28) zur Kunststoffbe- und/oder -verarbeitung,
**dadurch gekennzeichnet, dass** die Anlage wenigstens ein Blockheizkraftwerk (1) aufweist, an das die Vorrichtung (28) angeschlossen ist, dass an das Blockheizkraftwerk (1) eine Heizeinheit (40) über eine Abwärmeleitung (44, 45) angeschlossen ist, dass die Heizeinheit (40) über eine Leitung (41) mit wenigstens einem Trocknungsbehälter (20) für Kunststoff-Ausgangsstoffe verbunden ist, der zusammen mit der Heizeinheit (40) in einem Trocknungskreislauf liegt, dass der Trocknungsbehälter (20) über eine Rückluftleitung (36) mit einem Kühler (37) zur Kühlung der Rückluft verbunden ist, dass der Kühler (37) zum Entzug der Feuchtigkeit aus der Rückluft an eine Trocknungs- und Regeneriereinheit (38) angeschlossen ist, die Entfeuchtungseinheiten (94) aufweist, in deren Zuleitungen und Ableitungen Schaltventile (95, 96) sitzen, dass die Trocknungs- und Regeneriereinheit (38) über wenigstens eine Leitung (39, 93) mit der Heizeinheit (40) verbunden ist, und dass der Trocknungsbehälter (20) mit der Vorrichtung (28) leitungsverbunden (35, 107) ist.

2. Anlage nach Anspruch 1,
**dadurch gekennzeichnet, dass** an das Blockheizkraftwerk (1) wenigstens eine Kältemaschine (9) über eine weitere Abwärmeleitung (4) angeschlossen ist, dass die Kältemaschine (9) über eine Rückführleitung (27) mit einer Wärmetauschereinheit (31) verbunden ist, an die über wenigstens eine Leitung (32) die Vorrichtung (28) angeschlossen ist, die über wenigstens eine Rückführleitung (30) mit der Wärmetauschereinheit (31) verbunden ist, die über eine weitere Leitung (10) mit der Kältemaschine (9) verbunden ist.

3. Anlage nach Anspruch 2,
**dadurch gekennzeichnet, dass** die Kältemaschine (9) eine Absorptions-Kältemaschine ist.

4. Anlage nach einem der Ansprüche 1 bis 3,
**dadurch gekennzeichnet, dass** die Entfeuchtungseinheit (94) in einen Regenerationskreislauf schaltbar ist.

5. Anlage nach einem der Ansprüche 1 bis 4,
**dadurch gekennzeichnet, dass** das Blockheizkraftwerk (1) wenigstens einen Motor (15) aufweist, mit dem wenigstens ein Generator (17) antriebsverbunden ist.

6. Verfahren zum Betreiben einer Anlage mit wenigstens einer Vorrichtung zur Be- und/oder Verarbeitung von Kunststoffen nach einem der vorherigen Ansprüche bei dem Kunststoff-Ausgangsstoffe aus wenigstens einem Trocknungsbehälter (20) wenigstens einer Verarbeitungsmaschine (28) zugeführt werden,
**dadurch gekennzeichnet, dass** zum Trocknen des Kunststoff-Ausgangsstoffes die Abwärme (3 bis 5) und/oder erzeugter Strom (6) wenigstens eines Blockheizkraftwerkes (1) herangezogen wird, von dem wenigstens ein Teil der Abwärme (3 bis 5) über einen Wärmetauschprozess indirekt über Wärmetauscher (19, 88) auf ein Trocknungsmedium übertragen wird, das zum Trocknen des Kunststoff-Ausgangsstoffes verwendet wird, dass das Trocknungsmedium dem wenigstens einen Trocknungsbehälter (20) der Vorrichtung zugeführt wird, dass das Trocknungsmedium nach dem Durchtritt durch den Kunststoff-Ausgangsstoff als Rückluft gekühlt und anschließend getrocknet und regeneriert wird, indem das mit Feuchtigkeit beladene Trocknungsmedium durch Entfeuchtungseinheiten (94) geführt wird, und dass die getrocknete und regenerierte Rückluft auf Trocknungstemperatur erwärmt und dem Trocknungsbehälter (20) erneut zugeführt wird.

7. Verfahren nach Anspruch 6,
**dadurch gekennzeichnet, dass** als Abwärme die Abgase wenigstens eines Motors (15) des Blockheizkraftwerkes (1) verwendet werden.

8. Verfahren nach Anspruch 6 oder 7,
**dadurch gekennzeichnet, dass** als Abwärme ein Kühlmedium des Motors (15) des Blockheizkraftwerkes (1) herangezogen wird, dessen Wärme wenigstens einer Kältemaschine (9) zugeführt wird.

9. Verfahren nach einem der Ansprüche 6 bis 8,
**dadurch gekennzeichnet, dass** zumindest ein Teil des vom Generator (17) erzeugten Stroms der Vorrichtung zum Betrieb von Gebläsemotoren, elektrischen Heizelementen, Aktoren, Sensoren, Ventilen zugeführt wird.

10. Verfahren nach einem der Ansprüche 6 bis 9,
**dadurch gekennzeichnet, dass** überschüssige Restenergie (8, 14) anderen Prozessen im Umfeld des Kunststoff-Verarbeitungsprozesses (11) zugeführt wird.

## Claims

1. Plant having at least one device (28) for the treatment and/or processing of polymeric materials,
**characterized in that** the plant comprises at least one block-type thermal power station (1) to which the device (28) is attached, that a heating unit (40) is attached to the block-type thermal power station (1) via a waste heat line (44, 45), that the heating unit (40) is connected to at least one drying container (20) for polymeric material feedstocks via a line (41), said drying container lying along with the heating unit (40) in a drying circuit, that the drying container (20) is connected to a cooler (37) for cooling the return air via a return air line (36), that the cooler (37) for removing moisture from the return air is attached to a drying and regenerating unit (38) which has dehumidification units (94) in the supply lines and discharge lines whereof switch valves (95, 96) are located, that the drying and regenerating unit (38) is connected to the heating unit (40) via at least one line (39, 93) and that the drying container (20) is connected to the device (28) in a line-connected (35, 107) manner.

2. Plant according to claim 1,
**characterized in that** at least one refrigerating machine (9) is attached to the block-type thermal power station (1) via a further waste heat line (4), that the refrigerating machine (9) is connected via a return line (27) to a heat exchanger unit (31), to which the device (28) is attached via at least one line (32), which device is connected via at least one return line (30) to the heat exchanger unit (31) which is connected to the refrigerating machine (9) via a further line (10).

3. Plant according to claim 2,
**characterized in that** the refrigerating machine (9) is an absorption refrigerating machine.

4. Plant according to one of claims 1 to 3,
**characterized in that** the dehumidifying unit (94) can be switched into a regeneration circuit.

5. Plant according to one of claims 1 to 4,
**characterized in that** the block-type thermal power station (1) has at least one motor (15) to which at least one generator (17) is drive-connected.

6. Method for operating a plant having at least one device for the treatment and/or processing of polymeric materials according to one of the preceding claims in which polymeric material feedstocks are supplied from at least one drying container (20) of at least one processing machine (28),
**characterized in that** in order to dry the polymeric material feed stock, the waste heat (3 to 5) and/or generated electricity (6) from at least one block-type thermal power station (1) is used, of which at least part of the waste heat (3 to 5) is transferred via a heat exchange process indirectly by means of heat exchangers (19, 88) to a drying medium which is used to dry the polymeric material feedstock, that the drying medium is fed to the at least one drying container (20) of the device, that the drying medium is cooled after passing through the polymeric material feedstock as return air and is then dried and regenerated, **in that** the drying medium loaded with moisture is conducted through dehumidifying units (94) and that the dried and regenerated return air is heated to drying temperature and fed back to the drying container (20).

7. Method according to claim 6,
**characterized in that** the waste gases from at least one motor (15) of the block-type thermal power station (1) are used as waste heat.

8. Method according to claim 6 or 7,
**characterized in that** a cooling medium of the motor (15) of the block-type thermal power station (1) is used as waste heat, the heat from said block-type thermal power station being fed to at least one refrigerating machine (9).

9. Method according to one of claims 6 to 8,
**characterized in that** at least part of the electricity generated by the generator (17) is fed to the device for operating fan motors, electric heating elements, actuators, sensors, valves.

10. Method according to one of claims 6 to 9,
**characterized in that** surplus residual energy (8, 14) is fed to other processes in the vicinity of the polymeric material processing process (11).

## Revendications

1. Installation comportant au moins un dispositif (28) de traitement et/ou de transformation de plastique,
**caractérisée en ce que** l'installation présente au moins une centrale de cogénération (1) à laquelle le dispositif (28) est raccordé, qu'une unité chauffante (40) est raccordée à la centrale de cogénération (1) par une conduite de chaleur résiduelle (44, 45), que l'unité chauffante (40) est connectée par une conduite (41) à au moins une cuve de séchage (20) destinée aux matières de base du plastique et qui se trouve avec l'unité chauffante (40) dans un circuit de séchage, que la cuve de séchage (20) est connectée par une conduite d'air recyclé (36) à un refroidisseur (37) destiné à refroidir l'air recyclé, que le refroidisseur (37), pour extraire l'humidité de l'air recyclé, est raccordé à une unité de séchage et de régénération (38) qui présente des unités de déshumidification (94) dans des conduites d'alimentation et d'évacuation desquelles sont assises des vannes de commutation (95, 96), que l'unité de séchage et de régénération (38) est connectée par au moins une conduite (39, 93) à l'unité chauffante (40), et que la cuve de séchage (20) est connectée au dispositif (28) par une connexion à conduite (35, 107).

2. Installation selon la revendication 1,
**caractérisée en ce qu'**au moins une machine frigorifique (9) est raccordé à la centrale de cogénération (1) par une autre conduite de chaleur résiduelle (4), que la machine frigorifique (9) est connectée par une conduite de recyclage (27) à une unité d'échange de chaleur (31) à laquelle le dispositif (28) est raccordé par au moins une conduite (32) qui est connectée par au moins une conduite de recyclage (30) à l'unité d'échange de chaleur (31) qui est connectée par une autre conduite (10) à la machine frigorifique (9).

3. Installation selon la revendication 2,
**caractérisée en ce que** la machine frigorifique (9) est une machine frigorifique à absorption.

4. Installation selon une des revendications 1 à 3,
**caractérisée en ce que** l'unité de déshumidification (94) peut être branchée dans un circuit de régénération.

5. Installation selon une des revendications 1 à 4,
**caractérisée en ce que** la centrale de cogénération (1) présente au moins un moteur (15) auquel au moins un générateur (17) est connecté au niveau entraînement.

6. Procédé d'utilisation d'une installation comportant au moins un dispositif de traitement et/ou de transformation de plastiques selon une des revendications précédentes, dans lequel des matières de base du plastique provenant d'au moins une cuve de séchage (20) sont acheminées à au moins une machine de traitement (28),
**caractérisé en ce que**, pour sécher la matière de départ du plastique, on a recours à la chaleur résiduelle (3 à 5) et/ou au courant généré (6) d'au moins une centrale de cogénération (1), dont au moins une partie de la chaleur résiduelle (3 à 5) est transférée par un processus d'échange thermique indirectement par des échangeurs de chaleur (19, 88) dans un fluide de séchage qui est utilisé pour sécher la matière de base du plastique, que le fluide de séchage est acheminé dans l'au moins une cuve de séchage (20) du dispositif, que le fluide de séchage, après avoir été traversé par la matière de base du plastique, est refroidi en tant qu'air recyclé puis est ensuite séché et régénéré par le fait que le fluide de séchage chargé d'humidité est guidé à travers des unités de déshumidification (94) et que l'air recyclé séché et régénéré est chauffé à la température de séchage et de réacheminé dans la cuve de séchage (20) .

7. Procédé selon la revendication 6,
**caractérisé en ce qu'**on utilise comme chaleur résiduelle les gaz d'échappement d'au moins un moteur (15) de la centrale de cogénération (1).

8. Procédé selon la revendication 6 ou 7,
**caractérisé en ce qu'**on utilise comme chaleur résiduelle un fluide de refroidissement du moteur (15) de la centrale de cogénération (1) dont la chaleur est acheminée à au moins une machine frigorifique (9).

9. Procédé selon une des revendications 6 à 8,
**caractérisé en ce qu'**au moins une partie du courant généré par le générateur (17) est acheminée au dispositif pour faire fonctionner des moteurs de soufflerie, des éléments chauffants électriques, des actionneurs, des capteurs, des soupapes.

10. Procédé selon la revendication 6 à 9,
**caractérisée en ce que** l'énergie résiduelle excédentaire (8, 14) est acheminée vers d'autres processus dans l'environnement du processus de traitement de matière plastique (11).
